# EUROPEAN PATENT SPECIFICATION

(11) **EP 1 184 149 B1**
(45) Date of publication and mention of the grant of the patent: **13.08.2003**
(21) Application number: 01120521.8
(22) Date of filing: 28.08.2001
(51) Int. Cl.: B29C 44/56, B29C 61/06, F02B 77/13, B60R 13/08

(54) **Shape memory foam material**
Schaumkörper mit Formgedächtnis
Objet en mousse à mémoire de forme

(30) Priority: 29.08.2000 JP 2000259282
(43) Date of publication of application: 06.03.2002
(73) Proprietor: NICHIAS CORPORATION, Tokyo (JP)
(72) Inventor: Murakami, Atsushi, Hamamatsu-shi, Shizuoka (JP); Arisawa, Takumi, Hamamatsu-shi, Shizuoka (JP); Nishmoto, Kazuo, Hamamatsu-shi, Shizuoka (JP); Niwa, Takahiro, Tokyo (JP)
(74) Representative: Grünecker, Kinkeldey, Stockmair & Schwanhäusser Anwaltssozietät

(56) References cited:
- EP-A- 0 286 571
- GB-A- 911 427
- US-A- 4 808 450

## Description

### Background of the Invention

### Field of the Invention

The present invention relates to a foam material having a shape memory property, in particular, a foam material used for fluid sealing, soundproofing, and thermal insulation, and a production method therefor. Moreover, the invention provides a soundproof cover for an automobile, comprising the shape memory foam.

### Description of the Related Art

Various foam materials, such as a urethane foam, and liquid hardening sealing materials, such as a silicon sealant are used widely for fluid sealing, soundproofing, and thermal insulation for a joint in the buildings, the industrial appliances, and the automobiles. In order to provide the sufficient fluid sealing, soundproofing, and thermal insulation performances in these materials, the gap of a joint in the structure should be filled.

Conventional foam materials are mounted in a portion requiring a fluid sealing, soundproofing, or thermal insulation process (herein after referred to as a portion to be processed) in a compressed state such that the gap in the joint can be filled according to the thickness recovery by the elastic force of the foam material itself. However, since the conventional foam materials recover the thickness instantaneously when the pressure is released, the foam material or an assembly product using the foam material should be mounted in the portion to be processed while keeping the state resisting to the recovery force of the foam material in the compressed state, and thus the mounting operativity is extremely poor.

Although the mounting operativity can be improved by providing a thinner foam material, since a gap is generated with respect to the portion to be processed of the structure, the fluid sealing, soundproofing, and thermal insulation performances cannot be provided sufficiently. Moreover, it is also possible to reduce the recovery force of the foam material in the compressed state by using a soft foam material. However, the effect thereof is slight, and rather, it leads to deterioration of the foam material strength so as to shorten the life, and in particular, deteriorate the fluid sealing performance. Accordingly, the performance of the fluid sealing, soundproofing, thermal insulation, and the mounting property contradict with each other, and thus a foam material satisfying the characteristics is called for.

In contrast, as in a liquid hardening sealant material such as a silicone sealant, the gap is filled by introducing a liquid substance into a gap of a portion to be processed so as to be hardened according to the chemical reaction or the volatilization of a volatile material such as a solvent. However, the liquid hardening sealant material requires a long time in the sealing operation, and further, a long time is required for hardening of the material itself.

Moreover, JP-B-48-1903 discloses a technique for filling a gap by compressing an elastic synthetic resin sponge impregnated with a viscous resin composite, and restoring the same utilizing the hysteresis of time-restoration. However, since the foam material according to the method requires to be stored in a tightly packed state so as to retain the compressed shape so that it commences the restoration immediately after loosening the tight package even at a room temperature, in the case it is assembled in, for example, a soundproof cover, it is difficult to store in the compressed state, and thus the application range is limited.

JP-A-9-132668 discloses a shape recovery foam material comprising a closed-cell resin foam element. However, since the foam material requires a long time of several tens of days for the shape recovery, a problem arises in that the function of fluid sealing, soundproofing, thermal insulation, or the like cannot be realized immediately.

JP-B-7-39506 discloses a urethane shape memory polymer foam material, and JP-A-9-309986 discloses a shape memory vulcanized rubber formed member with a resin blended in a rubber. Moreover, it is known that a polynorborenene, and a styrene butadiene copolymer provide a shape memory polymer. By producing a sponge using these materials, a foam material with a shape recovery property can be obtained. However, in order to produce the foam material with the shape recovery property, a hardly accessible specific material is required, and further, a facility for producing the foam material is necessary, and thus it is not used widely.

### Summary of the Invention

In view of the above-mentioned circumstances, the invention has been achieved, and an object thereof is to provide a foam material having the excellent performances in fluid sealing, soundproofing, and thermal insulation as well as the excellent mounting operativity to a portion to be processed, to be obtained inexpensively without the need of special material or facility at the time of production. Moreover, another object of the invention is to provide a production method suitable for obtaining the foam material. Still another object of the invention is to provide a soundproof cover for an automobile engine using the foam material, having the excellent soundproof property.

As a result of the elaborate discussion of the present inventors for solving the problems, it was found out that a shape memory foam material with the shape retained in a compressed state without application of an external force in a room temperature, and the original thickness recovered by heating can be obtained by a specific process on the foam material not requiring a special facility, that is, by cooling in the compressed state after heating and compressing, and then, releasing the pressure. Moreover, it was found out that the shape in the compressed state in a room temperature can be retained further preferably by impregnating the foam material with a thermoplastic substance. It was further found out that by, using such a shape memory foam material in a portion to be processed, the excellent fluid sealing, soundproofing, and thermal insulation performances can be obtained as well as the mounting operation to a portion to be processed can be executed more easily. At the same time it was found out that such a shape memory foam material can provide a soundproof cover for an automobile engine with the excellent mounting property and soundproof performance. The invention is based on the knowledge.

That is, in order to achieve the objects, the invention provides a shape memory foam material according to claim 1, a method of producing a shape memory material according to claim 9 and a soundproof cover according to claim 10. As to the shape memory foam material, a composite material is produced by impregnating a base foam material in a thermoplastic substance having a melting point lower than that of the base foam material, and compression, wherein the compressed state is retained in a room temperature by a hardened product of the thermoplastic substance existing at least in the surface layer part thereof as well as the compressed state is released by softening the hardened product of the thermoplastic substance by heating. The room temperature denotes a temperature range between 18°C to 25°C.

Moreover, in order to achieve the same objects, the invention provides a production method for a shape memory foam material comprising the steps of impregnating a base foam material in a thermoplastic substance, heating and compressing the same at a temperature the same as or higher than the softening temperature of the thermoplastic resin as well as less than the softening temperature of the base foam material, cooling down while retaining the compressed state, and releasing the pressure after the cooling operation.

Furthermore, in order to achieve the same objects, the invention provides a soundproof cover for an automobile engine, comprising the shape memory foam material.

### Brief Description of the Drawings

FIG. 1 is a schematic perspective view showing an embodiment of a soundproof cover for an engine (V-engine) according to the invention.
FIG. 2 is a schematic diagram for explaining the mounting state (before heating) on an engine of the soundproof cover for an engine of FIG. 1.
FIG. 3 is a schematic diagram for explaining the mounting state (after heating) on an engine of the soundproof cover for an engine of FIG. 1.
FIG. 4 is a graph showing the results of the shape retention test of the test pieces of the embodiments.
FIG. 5 is a graph showing the results of the shape retention test of the test pieces of the embodiments.
FIG. 6 is a graph showing the results of the shape recovery test of the test pieces of the embodiments.
FIG. 7 is a graph showing the results of the shape recovery test of the test pieces of the embodiments.

### Detailed Description of the Preferred Embodiments

Hereinafter, the invention will be explained in detail with reference to the drawings.

As the main component of a base foam material to be used in the invention, various kinds of polymer materials, such as a rubber, an elastomer, a thermoplastic resin, a thermosetting resin, or the like can be used. Examples of the polymer materials include natural rubbers, synthetic rubbers such as a CR (chloroprene rubber), SBR (styrene butadiene rubber), an NBR (nitrile-butadiene rubber), an EPDM (ethylene-propylene-diene terpolymer copolymer), a silicone rubber, a fluoride rubber, and an acrylic rubber, elastomers such as a soft urethane, and thermosetting resins such as a hard urethane, a phenolic resin, and a melamine resin, but it is not limited thereto. In the case a synthetic rubber is used, it is used as a base foam material after cross-linking. In particular, a base foam material made of a thermosetting resin or a cross-linked rubber is preferable since it has a slight rigidity change in a room temperature and at the time of heating. Moreover, since a foam material containing a soft urethane as the main component is inexpensive, and it is used widely as a cushion material so as to be easily accessible, it is particularly preferable as a base foam material. Furthermore, even in the case of a foam material made of a thermoplastic resin, it can be used as a base foam material as long as the softening temperature thereof is higher than the softening temperature of a thermoplastic substance for the impregnation therein.

Since most of the above-mentioned base foam materials including the soft urethane foam are commercially available and easily accessible as well as a special facility is not required in the production, a shape memory foam material can be obtained easily and inexpensively. In contrast, in the case of the conventional shape memory foam materials, since the foam materials should be produced from a special material and the material can hardly be accessible, the shape memory foam materials cannot be obtained easily. Moreover, a special production facility is required for the foam materials.

Furthermore, it is preferable that a base foam material has an open-cell structure. In general, a foam material of an open cell structure has a large water absorption coefficient, a foam material of a closed-cell structure has a small water absorption coefficient, and a foam material of a mixed structure with an open cell and a closed cell has a middle water absorption coefficient. Therefore, by specifying the water absorption coefficient, the ratio of the open cell and the closed cell can be defined. The water absorption coefficient is measured according to the JIS K6767 B method. The water absorption coefficient of a base foam material used in the invention is preferably 0.2 g/cm³ or more, more preferably 0.3 g/cm³ or more, and further preferably 0.4 g/cm³ or more. Moreover, the bulk density of a base foam material is preferably 100 kg/m³ or less, more preferably 70 kg/m³ or less, and further preferably 50 kg/m³ or less. In the case a base foam material having the water absorption coefficient and the bulk density in these ranges is used, it can easily be impregnated with a thermoplastic substance so that a shape memory foam material with a good shape recovery property can be obtained.

As a thermoplastic substance used in the invention, various kinds of thermoplastic resins and various kinds of thermoplastic compounds can be used. However, the thermoplastic substance should have a melting point lower than that of the base foam material, and thus it can be selected optionally according to the base foam material to be used.

As shown in the shape retention/shape recovery mechanism to be described later, a shape memory foam material of the invention retains its shape in a room temperature, and recovers the original shape by heating. Therefore, a thermoplastic substance having a remarkable difference in an elastic modulus in a room temperature range and a high temperature range is preferable. Since the elastic modulus of a thermoplastic substance, in general, declines drastically when it reaches at the glass transition point or the melting point, also in the case of a shape memory foam material according to the invention, it has the shape recovery at a temperature in the vicinity of the glass transition point or the melting point (high temperature range). Therefore, with a remarkable elastic modulus difference between both temperature ranges, the shape retention/shape recovery can be carried out further preferably.

Moreover, a thermoplastic substance having the glass transition point or the melting point between a heating temperature to be used actually for the shape recovery (hereinafter referred to as the execution heating temperature) and a room temperature is preferable. However, even in the case the melting point and the glass transition point do not exist in the execution heating temperature range, since it is gradually softened by heating so as to have the shape recovery, a thermoplastic substance not having the melting point and the glass transition point in the execution heating temperature but having the softening temperature in the execution heating temperature range can also be used. In particular, it is preferable to use a thermoplastic substance having any of the glass transition point, the melting point, and the softening temperature being less than 120°C. Some of the above-mentioned base foam materials deteriorate and lose the elastic recovery force in the case they are heated at 120°C or more for the shape recovery so as not to provide the shape recovery property. Moreover, since a considerably long time is needed for heating the entirety of a shape memory foam material for the shape recovery to 120°C or more, use of a heating device with a high heating ability is required. The melting point and the glass transition point can be measured by the differential scanning calorie analysis (DSC). Moreover, the softening temperature can be measured by the air heating method defined in the JIS K7120.

As the substances satisfying the above conditions, for example, thermoplastic resins such as a polyethylene, a polypropylene, a polystyrene, a polyvinyl chloride, a polyvinylidene chloride, a polyvinyl acetate, a polyacrylate, a styrene-butadiene copolymer, a chlorinated polyethylene, a polyvinylidene fluoride, an ethylene-vinyl acetate copolymer, an ethylene-vinyl acetate-vinyl chloride-acrylate copolymer, an ethylene-vinyl acetate-acrylate copolymer, an ethylene-vinyl acetate-vinyl chloride copolymer, a nylon, an acrylonitrile-butadiene copolymer, a polyacrylonitrile, a polyvinyl chloride, a polychloroprene, a polybutadiene, a thermoplastic polyimide, a polyacetal, a polyphenylene sulfide, a polycarbonate and a thermoplastic polyurethane, thermoplastic compounds such as a low melting point glass frit, a starch, a solder and a wax, can be presented. However, the substance to be used is not limited thereto.

The thermoplastic substance in the invention denotes a substance to have the elastic modulus lowered or liquefied by heating. Therefore, the acrylonitrile-butadiene copolymer, the synthetic rubber polymers such as the styrene-butadiene copolymer and the polychloroprene are, in general, cross-linked so as to be used as a cross-linked rubber. Since, in a uncross-linked state or in a low cross-linking density, they have the rigidity dramatically different in a room temperature and in a heated state, they can be used as a thermoplastic substance in the invention. Moreover, some of the thermoplastic resins start the self cross-linking by heating with a cross-linking site provided, but since they are essentially thermoplastic and they have the rigidity dramatically different in a room temperature and in a heated state even after the self cross-linking, the self cross-linking type thermoplastic resins can also be used as a thermoplastic substance in the invention.

Moreover, a thermoplastic resin containing at least one of an acrylate, a styrene, and a vinyl acetate as a monomer unit has a glass transition point of 120°C or less, a high rigidity in a room temperature, and relatively good shape retention property and shape recovery property.

A shape memory foam material according to the invention can be obtained by impregnating the base foam material in the thermoplastic substance, heating and compressing the same at a temperature same as or higher than the softening temperature of the thermoplastic resin as well as less than the softening temperature of the base foam material, cooling down while retaining the compressed state, and releasing the pressure after the cooling operation. The shape memory foam material is a composite material wherein the compressed state is retained in a room temperature by a hardened product of the thermoplastic substance existing at least in the surface layer part thereof. The compressed state is released by softening the hardened product of the thermoplastic substance by heating. Hereinafter, the production method will be explained in detail.

For the impregnation of the base foam material with the thermoplastic substance, any method can be used, and a shape memory foam material can be obtained, with any method adopted. However, since a method of impregnating a base foam material with a thermoplastic substance dissolved or dispersed in a solvent, and drying the solvent, can be executed most easily, with the thermal deterioration of the foam material hardly generated, and thus it is preferable. In this case, for example, the base foam material can be impregnated with the thermoplastic substance by impregnating the base foam material in an emulsion with the thermoplastic substance dispersed or dissolved in a solvent, and drying the solvent. As the solvent, any solvent such as water, and an organic solvent can be used, but for a low toxicity at the time of drying, it is preferable to use water as the solvent. Moreover, since an emulsion with a thermoplastic resin dispersed in water is commercially available and relatively easily accessible, it is preferable as a thermoplastic substance material of a shape memory foam material of the invention. Furthermore, by optionally changing the concentration of the thermoplastic substance in the emulsion, the thermoplastic substance impregnation amount in the base foam material can be controlled.

Moreover, depending on the kind of the thermoplastic resin, it is also possible to impregnate the base foam material with a liquid monomer before polymerization, and polymerize the monomer in the base foam material. In this case, as the monomer, it is preferable to use a styrene monomer, an acrylate monomer, a vinyl acetate monomer, a vinyl alcohol monomer, or the like.

Furthermore, it is also possible to heat and melt the thermoplastic substance, impregnate the base foam material with the liquefied product, and cooling for solidification. In this case, any thermoplastic substance can be used. However, in the case of using a foam material of a material having a low thermal resistance, such as a urethane foam and a polyethylene foam as the base foam material, it is necessary to be careful so as to prevent deterioration thereof at the time of impregnation of the thermoplastic substance.

Any method including the above-mentioned methods, can be used for impregnating the base foam material with the thermoplastic substance. In the case of using an emulsion of the thermoplastic substance, a method for volatilizing the solvent after the impregnation is not particularly limited, and thus a method of blowing the hot air, or the like, can be adopted. Moreover, although the impregnation amount of the thermoplastic substance is not particularly limited, a amount of 0.01 to 0.1 g/cm³ is preferable.

Then, the base foam material impregnated with the thermoplastic substance is heated and compressed to a predetermined thickness so as to be retained for a predetermined time. Then, it is cooled down to a room temperature while retaining the compressed state. The compression amount is preferably to the half of thickness of the base foam material before the compression or less for obtaining the excellent fluid sealing, soundproofing, thermal insulation performances in a portion to be processed.

The series of the shape retention operation can also be executed, for example, by heating and compressing the base foam material after the thermoplastic substance impregnation by a thermal press, and cooling the same in the compressed state. Moreover, it is also possible to be carried out by heating the base foam material after the thermoplastic substance impregnation in an oven, compressing the same by a press immediately after being taken out from the oven, and cooling. For the compression, a weight can be placed instead of using the press. Moreover, for the continuous production, it is also possible to use a calendar roll for heating and compressing the base foam material after the thermoplastic substance impregnation by a hot roll, and cooling down the same while being compressed by a cold roll. Furthermore, in the case of impregnating the base foam material with the thermoplastic substance dissolved in a solvent as an emulsion, and heating the same for drying the solvent, it can be compressed and cooled down by a cooling roll immediately after drying, utilizing the heat at the time of the drying operation. The shape retention operation is not limited thereto, but any method capable of heating and compressing the base foam material after the thermoplastic substance impregnation, and cooling down the same in the compressed state can be adopted.

It is preferable that the heating temperature in the shaping step is in a range of 80 to 200°C, and the cooling temperature is in a range of 25 to 80°C.

After the cooling operation, by releasing the pressure, a shape memory foam material according to the invention can be obtained. The shape memory foam material of the invention has a shape memory property capable of retaining the compressed state in a room temperature, and releasing the compressed state by heating. Therefore, mechanisms for the shape retention property and the shape recovery property exist in the shape memory foam material of the invention. Although the shape memory foam material of the invention is not limited by a specific theory, the inventors presume that the shape retention property and the shape recovery property are realized by the following mechanisms.

Since a force for recovering the thickness functions on the base foam material by the elasticity in the case it is compressed, a shape retention force more than the recovery force is necessary for realizing the shape retention property. In contrast, the thermoplastic substance is softened so as to have the rigidity lowered in the case it is heated, and in some cases, it becomes liquid so that it can be deformed with a small stress in this state. Moreover, by cooling and solidifying the same in the deformed state, it can be a hardened product with a high rigidity so that the deformed shape can be retained. Therefore, in the case the base foam material is impregnated with the thermoplastic substance, heated and cooled down in the compressed state, the base foam material tends to recover the thickness by its elastic recovery force, but the compressed shape is retained by the thermoplastic substance hardened product so as to realize the shape retention property.

The shape memory foam material with the shape retained in the compressed state has a shape retention force more than the shape recovery force of the base foam material. In the case the shape recovery force is more than the shape retention force, the shape recovery property is realized. Therefore, reduction of the shape retention force is an effective means. In the shape memory foam material in the invention, the shape retention force is reduced by heat application. As mentioned above, since the thermoplastic substance is softened by heating so as to be deformed by a small stress, the thermoplastic substance hardened product is softened by heating so that the shape retention force is lowered. Thereby, the elastic recovery force of the base foam material exceeds the shape retention force. As a result, the shape recovery property is realized in the shape memory foam.

The above-mentioned is the mechanism of realization of the shape retention property and the shape recovery property of the shape memory foam of the invention.

For the heating operation for the shape recovery, for example, a method of pressing a hot plate heated to a predetermined temperature, a method of blowing hot air, or the like, can be adopted. The heating temperature thereof can be set optionally according to the thermoplastic substance melting point or glass transition point.

The shape memory foam material according to the invention can be used for the purpose of fluid sealing, soundproofing, and thermal insulation at a joint of a building, industrial machinery, and an automobile like the conventional materials. As mentioned above, a foam material is, in general, compressed and mounted in a portion to be processed, and fills the gap of the joint by the shape recovery by the elastic force of the foam material itself. However, in the case of the conventional foam materials, since they recover the original shape instantaneously in the case the pressure is released, they should be mounted in the portion to be processed while keeping the state resisting to the recovery force in the compressed state, and thus the mounting operativity is extremely poor. By thinning the foam material, the mounting operativity can be improved, but since a gap is generated, the soundproofing and thermal insulation performances are insufficient. Moreover, the operativity can be improved to some extent by using a soft foam material for lowering the recovery force of the foam material in the compressed state; however, the effect is slight, and rather the fluid sealing performance is made poorer.

In contrast, since the shape memory foam material of the invention has the shape retained in the compressed state, it can be mounted to the portion to be processed extremely easily. Moreover, since the shape is recovered for filling the gap by heating after the mounting operation, the fluid sealing, soundproofing, and thermal insulation performances can be provided sufficiently. Furthermore, in the case it is used in a machine to have heat generation by the drive, such as the industrial machinery, the automobiles later described, or the like, since the foam material shape is recovered by the heat generated by the machine operation, in some cases the heat application operation can be eliminated.

Moreover, the invention provides a soundproof cover for an automobile engine using the shape memory foam material.

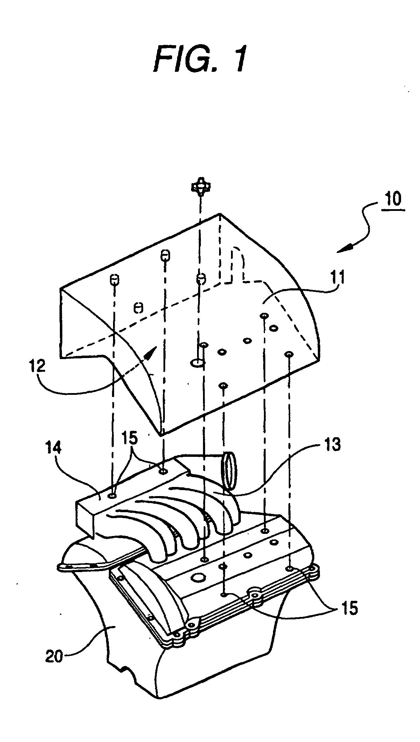

FIG. 1 is a perspective view showing a soundproof cover for an engine 10 used in a V-engine 20. The soundproof cover for an engine 10 has a foam material 12 as a soundproof material on the substantially entirety on the engine side surface (inner surface) of a cover main body 11 made of a metal or a resin. It is fixed by bolts (not shown) in fastening holes 15 provided in an intake manifold 13, an intake collector 14, or the like.

Since the engine 20 has a complicated shape, conventionally, the gap between the cover main body 11 and the engine is filled by mounting the foam material 12 in the engine 20 in the state compressed in the thickness direction thereof, and recovering the thickness by the elastic force of the foam material itself so as to improve the soundproof effect. However, since the foam material 12 recovers the instantaneously in the case the pressure is released, the soundproof cover for an engine 10 should be mounted on the engine 20 while keeping the foam material 12 in the compressed state, resisting to the recovery force thereof, and thus the mounting operativity is extremely poor.

By thinning the foam material 12, the mounting operativity can be improved, but since a gap is generated with respect to the engine 20, the soundproofing performance is insufficient. Moreover, the recovery force from the compressed state can be reduced by using a soft foam material 12, however, the effect is slight, and rather it leads to deterioration of the strength of the foam material 12 so that problems arises in that the life is shortened, or the like.

Furthermore, the foam material can be shaped according to the shape of the engine 20. However, the foam material 12 should be prepared according to the type of the engine 20, and further, in the case it is mounted in a plurality of portions in the engine, the foam material 12 should be prepared for each mounting portion so as to lead to the production cost increase. Besides, since the foam material 12 is not contacted with the engine 20 with pressure, slight gap generation with respect to the engine 20 cannot be avoided, and thus it is problematic also in terms of the soundproofing performance.

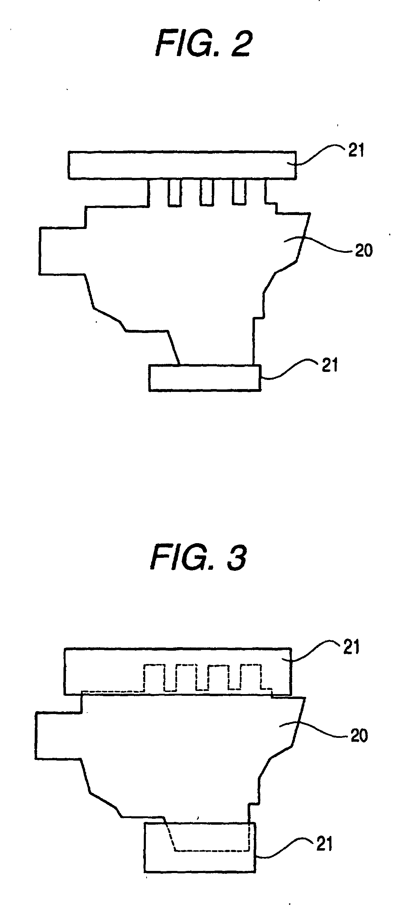

Therefore, a shape memory foam material of the invention is used as the foam material 12. As shown in FIG. 2 (for facilitating understanding, only the engine 20 and a shape memory foam material 21 are shown), the shape memory foam material 21 is retained in the state compressed in the thickness direction thereof, and thus unlike the conventional foam material, it can be mounted on the engine 20 without the need of resisting to the recovery force of the foam material in the compressed state. In this state, as shown in the figure, a gap exists between the engine 20 and the shape memory foam material 21. Then, as shown in FIG. 3, in the case the shape memory foam material 21 in the compressed state is heated to a predetermined temperature, the shape memory foam material 21 expands in the thickness direction so as to fill the gap and provide the closely contacted state with respect to the engine 20. Thereby, by using the shape memory foam material of the invention, not only the mounting operation on the engine can be facilitated, but also the soundproof performance can be improved.

The heating method for the shape recovery is not particularly limited, and a method of pressing a hot plate heated to a predetermined temperature against the cover main body 11, a method of blowing hot air by a drier, or the like, can be adopted. Moreover, the temperature in bonnet can frequently be about 80°C by an idling drive of the engine in a room automobile. Some of the shape memory foam materials recover the shape at a temperature lower than the above-mentioned, for example, about 75°C. In this case, the idling drive of the engine 20 is sufficient without the need of the heating operation particularly so that the number of the mounting operations can be reduced.

### Embodiments

Hereinafter, the invention will be explained in further details with reference to the embodiments, but the invention is not limited thereto.

### (Embodiment 1)

A urethane foam having bulk density of 25 kg/cm³, water absorption coefficient of 0.76 g/cm³, and a thickness of 14.5 mm, and a shape of 50 mm x 50 mm in the uncompressed state was impregnated with an emulsion of 50% by weight concentration and containing an ethylene-vinyl acetate-vinyl chloride copolymer having a glass transition point of 50°C. After squeezing by a squeezing roller, it was dried at 120°C for 20 minutes. After the drying operation, it was compressed by a thermal press of 100°C together with a spacer of 5 mm in thickness, and retained for about 5 minutes in the state. Then, the thermal press was cooled down to 25°C. After the cooling operation, the shape retaining operation for releasing the pressure was executed so as to produce a test piece.

### (Embodiment 2)

In the same process as in the embodiment 1 except that an emulsion of 25% by weight concentration of an ethylene-vinyl acetate-vinyl chloride copolymer was used, a test piece was produced.

### (Embodiment 3)

In the same process as in the embodiment 1 except that an emulsion of 50% by weight concentration and containing an ethylene-vinyl acetate-acrylate copolymer having a melting point of 72°C was used, a test piece was produced.

### (Embodiment 4)

The same urethane foam as in the embodiment 1 was impregnated with an emulsion of 50% by weight concentration and containing a styrene-acrylate copolymer having a glass transition point of 92°C. After squeezing by a squeezing roller, it was dried at 120°C for 20 minutes. After the drying operation, it was compressed by a 120°C thermal press together with a spacer of 5 mm in thickness, and retained for about 5 minutes in the state. Then, the thermal press was cooled down to 25°C. After the cooling operation, the pressure was released so as to produce a test piece.

### (Embodiment 5)

The same urethane foam as in the embodiment 1 was impregnated with a 50% by weight concentration emulsion containing a polystyrene having a glass transition point of 100°C. After squeezing by a squeezing roller, it was dried at 120°C for 20 minutes. After the drying operation, it was compressed by a thermal press of 120°C together with a spacer of 5 mm in thickness, and retained for about 5 minutes in the state. Then, the thermal press was cooled down to 25°C. After the cooling operation, the pressure was released so as to produce a test piece.

### (Comparative Example)

The same urethane foam as in the embodiment 1 was compressed by a thermal press of 100°C together with a spacer of 5 mm in thickness, and retained for about 5 minutes in the state. Then, the thermal press was cooled down to 25°C. After the cooling operation, the pressure was released so as to produce a test piece.

The test pieces of the embodiments were obtained by impregnating a urethane foam having a water absorption coefficient of 0.2 g/cm³ or more, and a bulk density of 100 kg/m³ or less with a thermoplastic resin having a glass transition point of 120°C or less or melting point of 120°C or less, heating and compressing, cooling down the same to a room temperature (25°C) while keeping the compressed state, and releasing the pressure after the cooling operation. In the embodiments 1, 2, the same thermoplastic resin was used, but the resin emulsion concentration and the impregnation amount according thereto differ. Moreover, the embodiments, 1, 3, 4, 5 differ in terms of the thermoplastic resin composition. The comparative example provides a test piece of a urethane foam not impregnated with a thermoplastic substance.

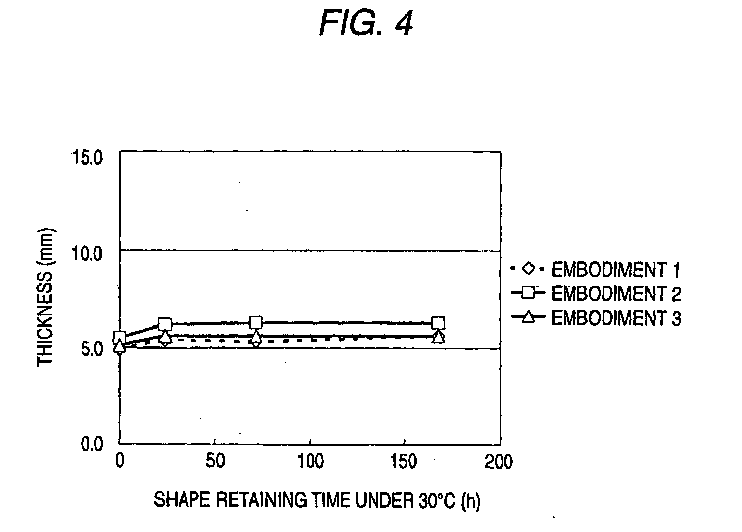

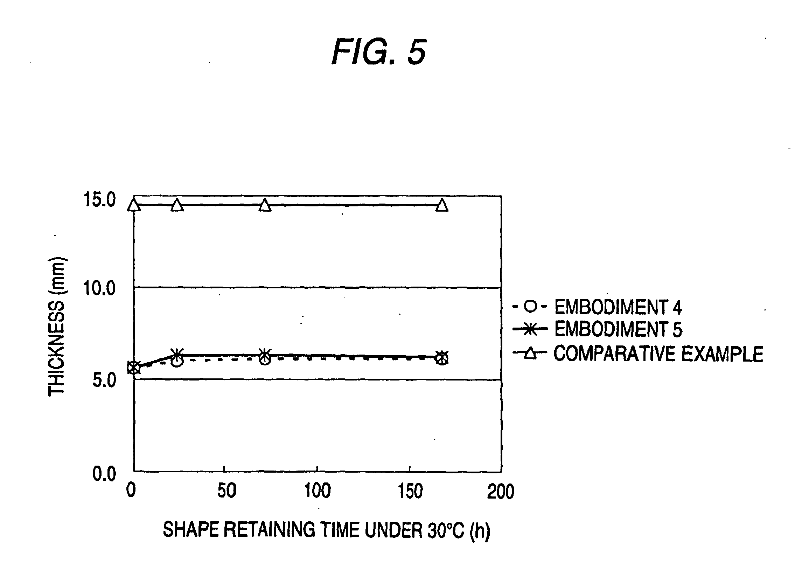

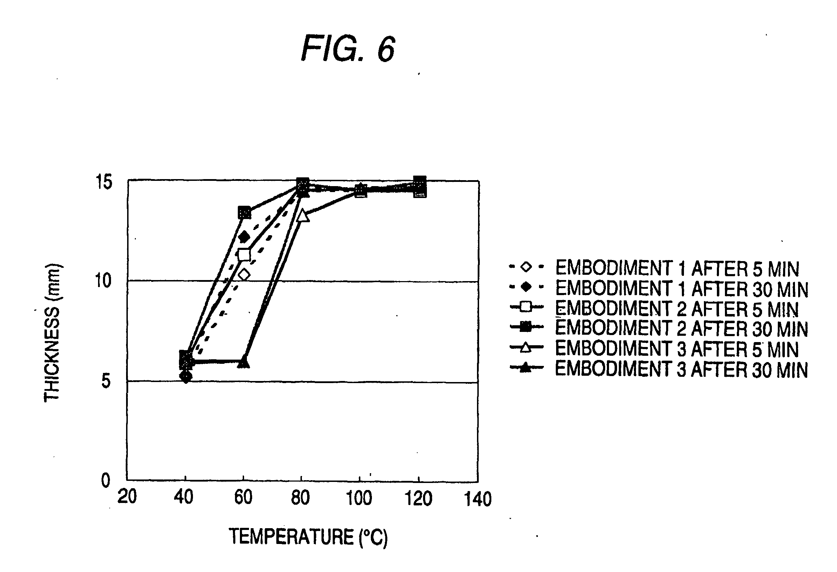

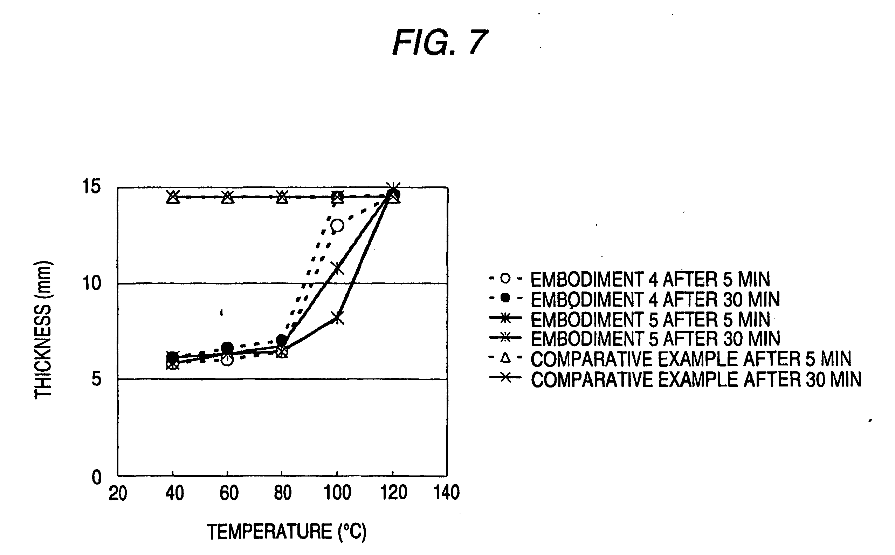

For each of the test pieces, the thickness was measured at 25°C after the shape retaining operation. Further, a shape retaining test and a shape recovery test were executed. In the shape retaining test, the test piece was placed in a constant temperature vessel of 30°C, and the thickness was measured after 24 hours, 72 hours, and 168 hours. Moreover, in the shape recovery test, 5 test pieces were prepared so that each can be placed in a constant temperature vessel of 40°C, 60°C, 80°C, 100°C, and 120°C, and the thickness was measured after 5 minutes and 30 minutes. The physical property and the thickness after the shape retaining operation of each test piece are shown in Tables 1 and 2. Results of the shape retaining test are shown in FIGS. 4 and 5, and results of the shape recovery test are shown in FIGS. 6 and 7.

**Table 1**

| | | Embodiment 1 | Embodiment 2 | Embodiment 3 |
|---|---|---|---|---|
| Compression Temperature (°C) | | 120 | 120 | 120 |
| Base foam material | Material | Urethane | Urethane | Urethane |
| | Thickness (mm) | 14.5 | 14.5 | 14.5 |
| | Bulk density (kg/m³) | 25 | 25 | 25 |
| | Water absorption coefficient (%) | 0.76 | 0.76 | 0.76 |
| Thermoplastic substance material | Material | Ethylene-vinyl acetate-vinyl chloride copolymer | Ethylene-vinyl acetate-vinyl chloride copolymer | Ethylene-vinyl acetate-acrylate copolymer |
| | Concentration (%) | 50 | 25 | 50 |
| | Glass transition point (°C) | 50 | 50 | - |
| | Melting point (°C) | - | - | 72 |
| Amount of thermoplastic substance impregnation (g/cm³) | | 0.042 | 0.025 | 0.032 |
| Thickness after the shape retaining operation (mm) | | 4.9 | 5.5 | 5.1 |

**Table 2**

| | | Embodiment 4 | Embodiment 5 | Comparative Example |
|---|---|---|---|---|
| Compression Temperature (°C) | | 120 | 120 | 120 |
| Base foam material | Material | Urethane | Urethane | Urethane |
| | Thickness (mm) | 14.5 | 14.5 | 14.5 |
| | Bulk density (kg/m³) | 25 | 25 | 25 |
| | Water absorption coefficient (%) | 0.76 | 0.76 | 0.76 |
| Thermoplastic substance material | Material | Styrene-acrylate copolymer | Polystyrene | - |
| | Concentration (%) | 50 | 25 | - |
| | Glass transition point (°C) | 92 | 100 | - |
| | Melting point (°C) | - | - | - |
| Amount of thermoplastic substance impregnation (g/cm³) | | 0.039 | 0.068 | 0 |
| Thickness after the shape retaining operation (mm) | | 5.6 | 5.6 | 14.5 |

Although each test piece of the embodiments retained a thickness close to the spacer thickness of 5 mm, the test piece of the comparative example recovered the original thickness immediately after the shape retaining operation without the shape retention. Moreover, in the shape retention test, each test piece of the embodiments had a substantially constant thickness after a slight recovery of the thickness after passage of 24 hours so as to keep the substantially same thickness at the time of passage of 24 hours after passage of 168 hours. In contrast, the test piece of the comparative example recovered the original thickness at the beginning of the test so as to keep in the state as it is. Furthermore, in the shape recovery test, each test piece of the embodiments substantially recovered within 30 minutes in a temperature range between 60°C and 120°C, which is the glass transition point or the melting point of the thermoplastic resin used. In contrast, the test piece of the comparative example already recovered the original thickness at the beginning of the test so that change by heating was not observed. From the results, it is apparent that the shape memory foam materials of the invention have good shape retention property and shape recovery property.

As heretofore explained, according to the invention, a foam material having the excellent performances in fluid sealing, soundproofing, and thermal insulation as well as the excellent mounting operativity to a portion to be processed, to be obtained inexpensively without the need of special material or facility at the time of production, can be provided. Moreover, according to the invention, a soundproof cover for an automobile engine having the excellent soundproof property and mounting property can be provided.

## Claims

1. A shape memory foam material comprising:
a base foam material; and
a thermoplastic substance impregnated in said base foam material and having a melting point lower than that of said base foam material,
wherein said shape memory foam material is a composite material obtained by compressing said base foam material and said thermoplastic substance, and
wherein a compressed state of said shape memory foam material is retained in a room temperature by a hardened product of said thermoplastic substance existing at least in the surface layer part thereof, and
wherein the compressed state is released by softening said hardened product of said thermoplastic substance by heating.

2. The shape memory foam material according to claim 1, wherein a volume of said base foam material is recovered in 70% or more of an uncompressed state thereof by heating.

3. The shape memory foam material according to claim 1, wherein a thickness of said base foam material is retained in a half or less of an uncompressed state thereof in a room temperature.

4. The shape memory foam material according to claim 1, wherein said base foam material is made of one of a thermosetting resin and a cross-linked rubber.

5. The shape memory foam material according to claim 1, wherein said base foam material is made of urethane.

6. The shape memory foam material according to claim 1, wherein said base foam material in an uncompressed state has a water absorption coefficient of 0.2 g/cm³ or more, and a bulk density of 100 kg/m³ or less.

7. The shape memory foam material according to claim 1, wherein said thermoplastic substance is a thermoplastic resin wherein at least one of a glass transition point, a melting point, and a softening temperature is less than 120°C.

8. The shape memory foam material according to claim 7, wherein said thermoplastic resin contains at least one selected from the group consisting of an acrylate, a styrene, and a vinyl acetate as a monomer unit.

9. A method of producing a shape memory foam material, comprising the steps of:
impregnating a base foam material in a thermoplastic substance;
heating and compressing said impregnated base foam material at a temperature the same as or higher than a softening temperature of said thermoplastic substance as well as less than a softening temperature of said base foam material;
cooling down said impregnated base foam material while retaining the compressed state; and
releasing the pressure after cooling.

10. A soundproof cover for an automobile engine, comprising a shape memory foam material including:
a base foam material; and
a thermoplastic substance impregnated in said base foam material and having a melting point lower than that of said base foam material,
wherein said shape memory foam material is a composite material obtained by compressing said base foam material and said thermoplastic substance, and
wherein a compressed state of said shape memory foam material is retained in a room temperature by a hardened product of said thermoplastic substance existing at least in the surface layer part thereof, and
wherein the compressed state is released by softening said hardened product of said thermoplastic substance by heating.

## Patentansprüche

1. Schaumstoffmaterial mit Formgedächtnis mit:
einem Basisschaumstoffmaterial; und
einer thermoplastischen Substanz, in das Basisschaumstoffmaterial imprägniert, und die einen Schmelzpunkt niedriger als jener des Basisschaumstoffmateriales hat,
wobei das Schaumstoffmaterial mit Formgedächtnis ein Verbundmaterial ist, erhalten durch Verdichten des Basisschaumstoffmateriales und der thermoplastischen Substanz, und
wobei ein verdichteter Zustand des Schaumstoffmateriales mit Formgedächtnis unter Raumtemperatur durch ein gehärtetes Produkt der thermoplastischen Substanz beibehalten wird, das zumindest in dem Oberflächenschichtteil derselben vorhanden ist, und
wobei der verdichtete Zustand durch Erweichen des gehärteten Produktes der thermoplastischen Substanz durch Erwärmen entlastet wird.

2. Schaumstoffmaterial mit Formgedächtnis nach Anspruch 1, wobei ein Volumen des Basisschaumstoffmateriales zu 70% oder mehr eines nichtkomprimierten Zustandes desselben durch Erwärmen wiederhergestellt wird.

3. Schaumstoffmaterial mit Formgedächtnis nach Anspruch 1, wobei eine Dicke des Basisschaumstoffmateriales zu einer Hälfte oder weniger eines nichtkomprimierten Zustandes desselben bei Raumtemperatur beibehalten wird.

4. Schaumstoffmaterial mit Formgedächtnis nach Anspruch 1, wobei das Basisschaumstoffmaterial aus entweder einem wärmehärtbaren Kunststoff oder einem quervernetzten Gummi hergestellt ist.

5. Schaumstoffmaterial mit Formgedächtnis nach Anspruch 1, wobei das Basisschaumstoffmaterial aus Urethan hergestellt ist.

6. Schaumstoffmaterial mit Formgedächtnis nach Anspruch 1, wobei das Basisschaumstoffmaterial in einem nichtkomprimierten Zustand einen Wasserabsorptionskoeffizienten von 0,2 g/m³ oder mehr, und eine Rohdichte von 100 kg/m³ oder weniger hat.

7. Schaumstoffmaterial mit Formgedächtnis nach Anspruch 1, wobei die thermoplastische Substanz ein thermoplastischer Kunststoff ist, wobei zumindest einer vom Transformationspunkt, ein Schmelzpunkt oder Erweichungstemperatur geringer als 120° ist.

8. Schaumstoffmaterial mit Formgedächtnis nach Anspruch 7, wobei der thermoplastische Kunststoff zumindest einen aus der Gruppe, die aus einem Acrylat, einem Styren oder einem Vinylacetat als eine Monomereinheit besteht, ausgewählten Kunststoff enthält.

9. Verfahren zum Herstellen eines Schaumstoffmateriales mit Formgedächtnis mit den Schritten von:
Imprägnieren eines Basisschaumstoffmateriales in eine thermoplastische Substanz;
Erwärmen und Verdichten des imprägnierten Basisschaumstoffmateriales bei einer Temperatur, die gleich oder höher als eine Erweichungstemperatur der thermoplastischen Substanz sowie geringer als eine Erweichungstemperatur des Basisschaumstoffmateriales ist;
Abkühlen des imprägnierten Basisschaumstoffmateriales während des Beibehaltens des komprimierten Zustandes; und
Entlasten des Druckes nach dem Abkühlen.

10. Schalldichte Abdeckung für einen Kraftfahrzeugmotor mit einem Schaumstoffmaterial mit Formgedächtnis, das enthält:
ein Basisschaumstoffmaterial; und eine thermoplastische Substanz, imprägniert in dem Basisschaumstoffmaterial, und die einen niedrigeren Schmelzpunkt als jenen des Basisschaumstoffmateriales hat,
wobei das Schaumstoffmaterial mit Formgedächtnis ein Verbundmaterial ist, erhalten durch Komprimieren des Basisschaumstoffmateriales und der thermoplastischen Substanz, und
wobei ein komprimierter Zustand des Schaumstoffmateriales mit Formgedächtnis bei Raumtemperatur durch ein ausgehärtetes Produkt der thermoplastischen Substanz, des zumindest in dem Oberflächenschichtteil derselben vorhanden ist, beibehalten wird, und
wobei der komprimierte Zustand durch Erweichen des gehärteten Produktes beim Erwärmen der thermoplastischen Substanz entlastet wird.

## Revendications

1. Matériau de mousse à mémoire de forme comprenant :
un matériau de mousse de base ; et
une substance thermoplastique imprégnée dans ledit matériau de mousse de base et ayant un point de fusion inférieur à celui dudit matériau de mousse de base,
dans lequel ledit matériau de mousse à mémoire de forme est un matériau composite obtenu en compressant ledit matériau de mousse de base et ladite substance thermoplastique, et
dans lequel un état compressé dudit matériau de mousse à mémoire de forme est maintenu à une température ambiante par un produit durci de ladite substance thermoplastique existant au moins dans la partie constituée par la couche de surface de celui-ci, et
dans lequel l'état compressé est relâché en ramollissant ledit produit durci de ladite substance thermoplastique par chauffage.

2. Matériau de mousse à mémoire de forme selon la revendication 1, dans lequel un volume dudit matériau de mousse de base est récupéré à au moins 70 % d'un état non compressé de celui-ci par chauffage.

3. Matériau de mousse à mémoire de forme selon la revendication 1, dans lequel une épaisseur dudit matériau de mousse de base est maintenu dans au plus la moitié d'un état non comprimé de celui-ci à une température ambiante.

4. Matériau de mousse à mémoire de forme selon la revendication 1, dans lequel ledit matériau de mousse de base est constitué de l'un des éléments suivants : la résine thermodurcissable et le caoutchouc réticulé.

5. Matériau de mousse à mémoire de forme selon la revendication 1, dans lequel ledit matériau de mousse de base est constitué d'uréthane.

6. Matériau de mousse à mémoire de forme selon la revendication 1, dans lequel ledit matériau de mousse de base dans un état non compressé a un coefficient d'absorption d'eau d'au moins 0,2 g/cm³, et une densité apparente d'au plus 100 kg/m³.

7. Matériau de mousse à mémoire de forme selon la revendication 1, dans lequel ladite substance thermoplastique est une résine thermoplastique dans laquelle au moins l'un parmi le point de transition vitreuse, le point de fusion et 1a température de ramollissement est inférieur à 120 °C.

8. Matériau de mousse à mémoire de forme selon la revendication 7, dans lequel ladite résine thermoplastique contient au moins un élément choisi dans le groupe constitué d'un acrylate, d'un styrène et d'un acétate de vinyle comme une unité monomère.

9. Procédé de fabrication d'un matériau de mousse à mémoire de forme comprenant les étapes consistant à :
imprégner un matériau de mousse de base dans une substance thermoplastique ;
chauffer et compresser ledit matériau de mousse de base imprégné à une température égale ou supérieure à une température de ramollissement de ladite substance thermoplastique et inférieure à une température de ramollissement dudit matériau de mousse de base ;
refroidir ledit matériau de mousse de base imprégné tout en maintenant l'état compressé ; et
relâcher la pression après le refroidissement.

10. Couvercle insonorisé pour un moteur d'automobile, comprenant un matériau de mousse à mémoire de forme comprenant :
un matériau de mousse de base ; *;* et
une substance thermoplastique imprégnée dans ledit matériau de mousse de base et ayant un point de fusion inférieur à celui dudit matériau de mousse de base,
dans lequel ledit matériau de mousse à mémoire de forme est un matériau composite obtenu en compressant ledit matériau de mousse de base et ladite substance thermoplastique, et
dans lequel un état compressé dudit matériau de mousse à mémoire de forme est maintenu à une température ambiante par un produit durci de ladite substance thermoplastique existant au moins dans la partie constituant la couche de surface de celui-ci, et
dans lequel l'état compressé est relâché en ramollissant ledit produit durci de ladite substance thermoplastique par chauffage.
